Europäisches Patentamt

European Patent Office

Office européen des brevets

(19)

(11) Numéro de publication : **0 088 026**

**B1**

(12)
# FASCICULE DE BREVET EUROPÉEN

(45) Date de publication du fascicule du brevet :
**02.01.86**

(51) Int. Cl.⁴ : **G 01 F 23/14**, G 01 F 23/16

(21) Numéro de dépôt : **83400423.6**

(22) Date de dépôt : **02.03.83**

(54) **Tête de détection de niveau par effet hydrostatique avec protection.**

(30) Priorité : **03.03.82 FR 8203505**

(43) Date de publication de la demande :
**07.09.83 Bulletin 83/36**

(45) Mention de la délivrance du brevet :
**02.01.86 Bulletin 86/01**

(84) Etats contractants désignés :
**AT BE CH DE GB IT LI LU NL SE**

(56) Documents cités :
**FR-A- 2 128 815
GB-A- 649 220
ADVANCES IN INSTRUMENTATION, vol. 31, no. 2,
février 1976, pages 604/1-604/11 W. E. SAMUELS et
al.: "Fluidic/pneumatic level measurement of cryogenic fluids"**

(73) Titulaire : **MATERIEL ET AUXILIAIRE DE SIGNALISA-
TION ET DE CONTROLE POUR L'AUTOMATION -
AUXITROL
187-189 Boulevard Saint Denis
F-92403 Courbevoie (FR)**

(72) Inventeur : **Khoi, Danny James
26 rue Pasteur
F-92210 Saint Cloud (FR)**

(74) Mandataire : **Martin, Jean-Jacques et al
Cabinet REGIMBEAU 26, Avenue Kléber
F-75116 Paris (FR)**

Jouve, 18, rue St-Denis, 75001 Paris, France

## Description

L'invention concerne la mesure de niveau de liquide dans les réservoirs par insufflation de gaz. Ce type de mesure fait intervenir une tête de détection de niveau par effet hydrostatique, associée au réservoir, et destinée à être reliée à une sonde plongeant dans le liquide surmonté d'un gaz et dont le niveau est à mesurer, pratiquement jusqu'au fond du réservoir.

On connaît déjà des têtes de détection de ce genre qui comprennent une enceinte principale, subdivisée en une chambre amont et une chambre aval par une membrane à rappel élastique. Au bas de la tête de détection est prévu un orifice de sonde rempli dudit gaz et qui communique avec la chambre aval. Par ailleurs, une arrivée dudit gaz sous pression communique avec la chambre amont par l'intermédiaire d'une valve couplée à la membrane, de manière à définir la pression dans la chambre amont par rapport à la pression dans la chambre aval. Enfin, on prévoit une dérivation à régulation de débit, ménagée entre les chambres amont et aval, et un organe sensible à la pression est connecté à la chambre aval, ce qui permet de mesurer la pression aval correspondant à un débit donné, et par là la hauteur du liquide.

Ces appareils sont utilisés notamment à bord des navires, et ont été équipés jusqu'à présent de cadrans indicateurs analogiques. Dans ces conditions, on prévoit dans le navire un poste central, où sont regroupées toutes les têtes de détection de niveau, qui sont reliées par des canalisations convenables à leur réservoir respectif, étant observé que la longueur de ces canalisations, remplies du gaz, modifie très peu la mesure.

Un premier inconvénient est apparu, en ce que des fuites peuvent se produire sur les longueurs de canalisations prévues entre la tête de détection au poste central et le réservoir, alors que ces canalisations sont très souvent implantées en site inaccessible, et peuvent mesurer plusieurs centaines de mètres. Une telle fuite rend naturellement l'indication de niveau obtenue insignifiante.

Par ailleurs, il est apparu souhaitable de rendre les mesures plus précises. Cela suppose tout d'abord de prélever l'information de pression au niveau du réservoir plutôt qu'à distance, afin d'éliminer les erreurs dues aux longueurs de canalisations précitées ; cela suppose également d'utiliser des moyens détecteurs de pression plus précis, ainsi que de transformer leur indication en signaux électriques numériques.

Corrélativement à ces besoins, est apparu un autre problème : jusqu'à présent, on devait laisser le soin à l'opérateur, au niveau du poste central, de réagir pour éviter les effets néfastes d'une chute de la pression d'air comprimé sur la tête de détection, ainsi que pour réaliser un débouchage de l'appareil lorsque le niveau est monté à l'intérieur de la sonde, précisément parce que l'alimentation en air comprimé a chuté.

La présente invention comme revendiquée dans la revendication 1 a essentiellement pour objet une amélioration sensible de la situation.

A cet effet, la liaison de la chambre aval à la sonde comporte une enceinte auxiliaire, qui est elle aussi délimitée comme la chambre principale en chambre auxiliaire amont et chambre auxiliaire aval par une autre membrane. La chambre auxiliaire amont communique avec l'arrivée du gaz sous pression, tandis que la chambre auxiliaire aval sert de liaison entre la chambre principale aval et la sonde, tout en comportant un moyen de rappel élastique taré, ainsi qu'un clapet de sonde. Le clapet de sonde est monté de manière à se fermer en l'absence d'arrivée du gaz sous pression, ce qui empêche alors une remontée de liquide du réservoir vers la tête de détection de niveau.

Additionnellement, il est avantageusement prévu, au niveau de clapet de sonde, un orifice normalement obturé, qui permet l'étalonnage in situ de la détection de niveau.

Selon une variante de l'invention, la liaison entre la chambre aval et l'organe sensible à la pression comporte un clapet de sécurité. Il est prévu une enceinte de référence subdivisée par une troisième membrane en une chambre de pression de référence et une chambre de protection reliée à la chambre principale aval. La chambre de référence comporte un autre moyen de rappel élastique taré, et la troisième membrane est couplée au clapet de sécurité pour fermer celui-ci en cas de surpression dans la chambre principale aval. On évite de cette manière que l'élément sensible à la pression ne soit endommagé par une surpression. On notera que de telles surpressions importantes et accidentelles peuvent se produire dans le cas de navires porteurs de gaz liquifiés à la fois par le froid et sous-pression.

Dans un mode de réalisation particulier, l'organe sensible à la pression comporte un quartz piézo-résistif. Il est avantageusement associé à un circuit d'exploitation comportant de préférence un réseau résistif à décades pour le réglage de gamme et/ou pour le réglage en fonction de la densité du liquide.

Dans un mode de réalisation particulièrement avantageux, la chambre de référence comporte un orifice de liaison vers le haut du réservoir, ou ciel gazeux, et une autre liaison vers l'organe sensible à la pression, ce dernier détectant alors la différence de pression entre le haut du réservoir et son ciel gazeux et la chambre aval principale, ce qui est à nouveau particulièrement intéressant dans le cas de combustibles gazeux liquifiés sous pression et sous basse température, car la pression du ciel gazeux dépend alors largement de la température existante.

D'autres caractéristiques et avantages de l'invention apparaîtront à la lecture de la description détaillée qui va suivre, et sur les dessins annexés, sur lesquels :

la figure 1 illustre sous la forme d'une vue en coupe verticale un mode de réalisation préférentiel des têtes de détection selon l'invention ;

la figure 2 est une vue en coupe partielle du haut de la tête de détection montrant certains détails qui n'apparaissent pas sur la figure 1 ; et

la figure 3 est une vue en coupe au niveau de l'axe de l'orifice 4 de la figure 1.

On notera que certaines lignes de coupe utilisées dans les dessins sont des lignes de coupe brisées, de manière à mieux faire apparaître des détails de l'invention.

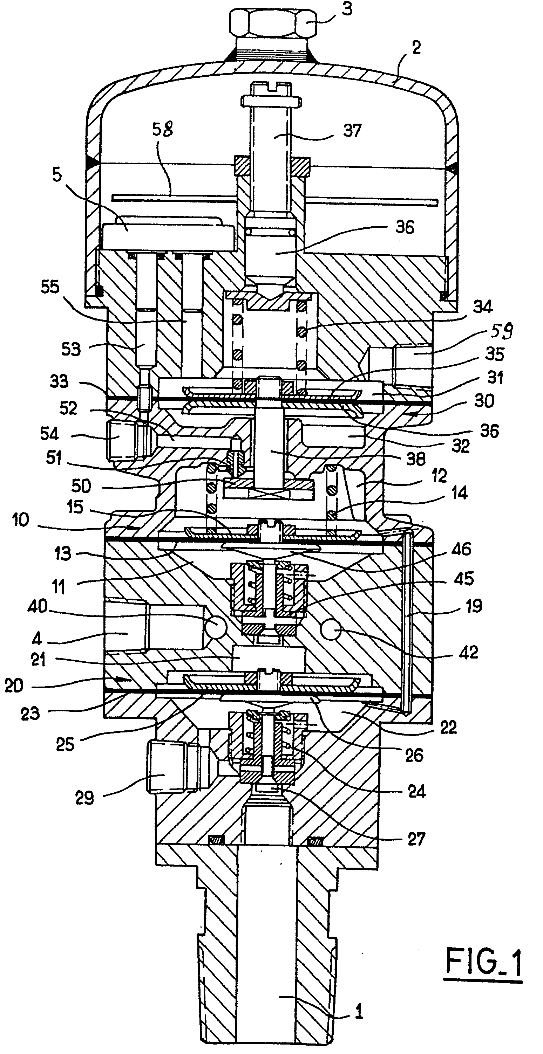

Extérieurement, la tête de détection de la figure 1 comporte en partie supérieure un capot 2, en partie inférieure une conduite 1 logée à l'intérieur d'un tube fileté, susceptible de venir en prise sur une sonde plongeant dans le liquide d'un réservoir. Entre les deux, le corps de la tête de détection comporte un grand nombre d'éléments que l'on décrira ci-après.

La référence 10 désigne une enceinte principale, qui est subdivisée en une chambre amont 11 et une chambre aval 12 par une membrane 13. La membrane 13 est munie en partie supérieure d'une coupelle 15, qui est solidaire de la membrane, et sur laquelle s'appuie un ressort 14, dont l'autre extrémité s'appuie sur le corps de tête de détection. Ainsi se trouve défini un rappel élastique sur la membrane 13.

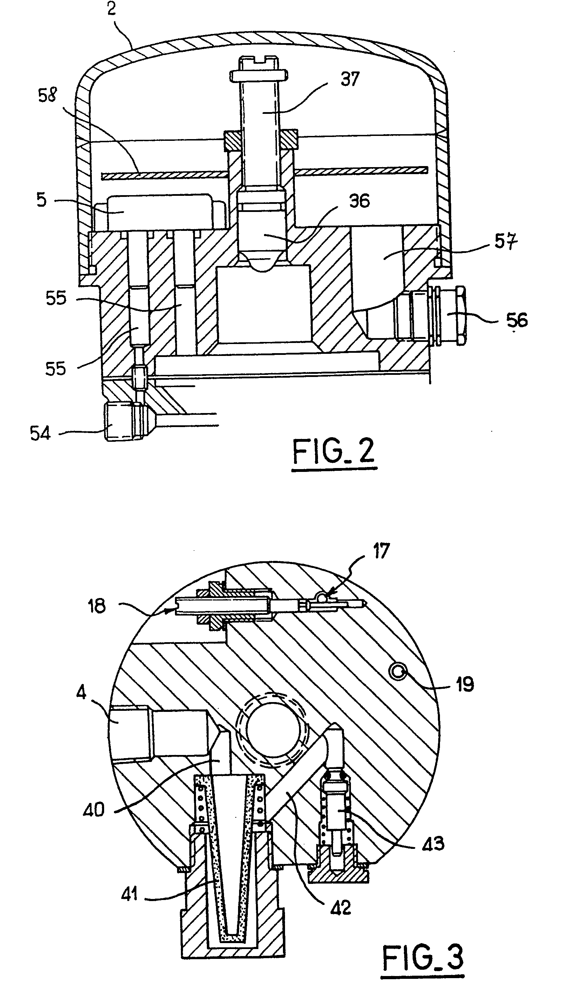

On se référera maintenant à la fois aux figures 1 et 3. Sur ces figures, on voit une arrivée d'air sous pression 4, qui communique par l'intermédiaire d'une tubulure 40 avec un corps de filtrage en bronze poreux 41, destiné à éliminer toute poussière et autres corps qui pourraient être en suspension dans l'air et seraient nuisibles au bon fonctionnement du mécanisme de la tête de détection. Après le filtre en bronze poreux, une conduite 42 amène l'air sous pression à un clapet détendeur 43 monté en série, la sortie de ce clapet 43 communiquant par une tubulure non visible avec la partie 21 de la tête de détection. Enfin, par l'intermédiaire d'une valve 45 dont l'élément mobile est solidaire de la membrane 13, avec interposition d'une coupelle 46, l'air sous pression vient finalement arriver dans la chambre principale amont 11.

On voit aussi sur la figure 1 une enceinte auxiliaire, désignée généralement par 20, et qui comporte comme la première une chambre amont 21, une chambre aval 22, une membrane 23, solidaire en partie supérieure d'une coupelle 25 et en partie inférieure d'une coupelle 26. Cette coupelle 26 est à son tour solidaire de l'élément mobile 24, d'un clapet 27, qui permet ou non la communication entre la chambre aval 22 et la conduite 1 allant vers la sonde.

On voit immédiatement qu'en l'absence accidentelle d'une arrivée d'air sous pression dans la chambre auxiliaire amont 21, le clapet 27 va se trouver fermé sur son siège sous l'effet du ressort 24, qui ne voit plus d'effort antagoniste. Dans ces conditions, on empêche une remontée du liquide du réservoir vers la tête de détection de niveau. Inversement, lorsque l'air sous pression est présent dans la chambre 21, cette pression est normalement suffisante pour assurer l'ouverture du clapet 27, et la communication normale entre l'orifice de sonde 1 et la chambre aval 22 de l'enceinte auxiliaire. A son tour, cette chambre aval 22 de l'enceinte auxiliaire communique par la tubulure 19 avec la chambre aval 12 de l'enceinte principale, déjà citée.

Au bas de la figure 1, on voit également en 29, au niveau du clapet de sonde 27, un orifice qui est normalement obturé, et permet l'étalonnage in situ de la détection de niveau. En effet, cet orifice permet l'application directe à la chambre 22, sans passer par le clapet 27, de toute pression désirée. Cette pression se trouve naturellement dans la chambre aval 12 de l'enceinte principale.

Il existe par ailleurs une dérivation 17 à régulation de débit 18, ménagée entre les chambres amont 11 et aval 12 de l'enceinte principale, et qui permet de régler finement le débit d'air comprimé de façon que ce débit demeure très faible au niveau de l'extrémité de la sonde. Avec une telle régulation, on est sûr qu'il n'y a pratiquement pas de perte de charge dynamique au niveau de l'écoulement de l'air. Comme la hauteur de la colonne d'air présente par ailleurs un effet de pression très faible par rapport à la hauteur de la colonne de liquide, on retrouve pratiquement au niveau de la chambre 12 une pression représentative de celle qui existe à l'extrémité du tuyau de la sonde.

Cette pression va donc bien être représentative du niveau de liquide.

Maintenant, si l'on considère la chambre aval 12, on voit qu'entre celle-ci et l'organe sensible à la pression 5 est prévu un clapet de sécurité défini par un siège 51, et un organe mobile 50. Le siège 51 communique par un orifice central avec une tubulure horizontale 52, aboutissant à un orifice 54, normalement obturé, ainsi que par une tubulure verticale 53 vers l'une des entrées de l'organe sensible 5.

D'un autre côté, l'élément mobile 50 du clapet est solidaire d'une tige 38, qui coulisse avec un fort jeu dans un alésage communiquant avec la chambre 32, laquelle constitue une chambre de protection. En effet, à l'intérieur d'une troisième enceinte 30, cette chambre 32 se situe d'un côté d'une membrane 33, tandis que de l'autre côté est définie une chambre 31 qui communique avec un orifice 59 allant vers l'extérieur, et destinée à être reliée soit à une pression de référence, soit, de préférence, à la pression présente dans le ciel gazeux du réservoir. On voit donc que la chambre 32 est reliée à la chambre principale aval 12 par le passage demeurant autour de la tige 38. D'un autre côté, de part et d'autre de la membrane 33 sont prévues des coupelles 35 et 36, solidaires de la membrane, et la coupelle 35 est sollicitée par un ressort 34, formant rappel élastique taré par l'intermédiaire d'une tige de commande 36 actionnable sous l'effet du filetage 37 muni d'une tête de vis, et accessible soit par enlèvement du capot 2, soit par enlèvement de la vis 3 qui le surmonte.

Si l'arrivée d'air sous pression est normale, mais qu'il se produit néanmoins une surpression dans la chambre principale aval 12, cette surpression sera suffisante pour vaincre l'effort de rappel défini par le ressort 34, et par conséquent le clapet défini par les éléments 50 et 51 va se fermer, protégeant alors l'élément sensible 5.

Dans le cas, préférentiel, où l'on a d'un côté de la membrane 33 la pression à mesurer, et de l'autre la pression du ciel gazeux, la sécurité ainsi obtenue est particulièrement efficace.

Dans les mêmes conditions, il est avantageux que la chambre 31 reliée au ciel gazeux soit reliée par une tubulure 55 à l'organe 5 sensible à la pression, lequel est alors avantageusement un organe qui détecte la pression différentielle.

Dans un mode de réalisation préférentiel, l'organe 5 sensible à la pression comporte au moins un quartz piézo-résistif, éventuellement deux quartz piézo-résistifs, pour une mesure de pression différentielle. Ce type d'organe sensible est normalement associé à un circuit d'adaptation, lequel peut être porté par une plaque de circuit imprimé 58 placé sous le capot 2. On prévoit avantageusement sur ce circuit imprimé un réseau résistif à décades pour le réglage de gamme, et surtout un réseau de réglage en fonction de la densité du liquide.

Les liaisons de sortie de mesure, disponibles sous forme numérique, après conversion convenable, passent par la tubulure 57 et le connecteur 56 pour aller rejoindre le poste central d'exploitation où se trouve l'opérateur (voir figure 2).

On voit maintenant que l'appareil selon la présente invention est capable de résoudre de façon simple les problèmes précités, tout en permettant l'installation de la tête de détection au niveau même du réservoir. Les sécurités sont assurées, en particulier en cas de chute de la pression d'alimentation en air comprimé. De même, s'il s'agit de faire un débouchage de l'appareil, celui-ci se produit d'une manière très simple et automatique. En effet, si la pression d'air comprimé disparaît, le clapet 27 se ferme immédiatement, empêchant tout le liquide d'envahir la tête de détection. Il suffira alors de rétablir la pression d'alimentation, et le clapet 27 va naturellement repousser le fluide vers l'extrémité de la sonde, sans que celui-ci n'ait pu endommager les parties essentielles de l'appareil. On se rappellera qu'il s'agit généralement d'un liquide assez corrosif.

**Revendications**

1. Tête de détection de niveau de liquide dans un réservoir par effet hydrostatique, destinée, à être reliée à une sonde plongeant dans le liquide surmonté d'un gaz et dont le niveau est à mesurer, cette tête comprenant une enceinte principale (10), subdivisée en une chambre principale amont (11) et une chambre principale aval (12) par une membrane (13) à rappel élastique (14), un orifice de sonde (1) rempli dudit gaz et qui communique avec la chambre principale aval (12), une arrivée (4) dudit gaz sous pression, qui communique avec la chambre principale amont (11) par l'intermédiaire (21) d'une valve (45) couplée à la membrane (13), de manière à définir la pression dans la chambre principale amont par rapport à la pression dans la chambre principale aval, une dérivation à régulation de débit, ménagée entre les chambres principales amont (11) et aval (12), et un organe (5) sensible à la pression, connecté à la chambre principale aval, ce qui permet de mesurer la pression aval correspondant à un débit donné, et, par là, la hauteur du liquide, caractérisée par le fait que la liaison de la chambre principale aval (12) à la sonde comporte une enceinte auxiliaire (20), elle aussi délimitée en chambre auxiliaire amont (21) et la chambre auxiliaire aval (22) par une autre membrane (23), la chambre auxiliaire amont (21) communiquant avec l'arrivée du gaz sous pression, tandis que la chambre auxiliaire aval (22) sert de liaison (19) entre la chambre principale aval (11) et la sonde (1), tout en comportant un moyen de rappel élastique taré (24), et un clapet de sonde (27), monté de manière à se fermer en l'absence d'arrivée du gaz sous pression, ce qui empêche alors une remontée de liquide du réservoir vers la tête de détection de niveau.

2. Tête de détection de niveau selon la revendication 1, caractérisée par le fait qu'il est prévu, au niveau du clapet de sonde (27), un orifice (29) normalement obturé qui, une fois ouvert, est en communication directe avec la chambre auxiliaire aval (22), permettant ainsi l'étalonnage in situ de la détection de niveau.

3. Tête de détection de niveau selon l'une des revendications 1 et 2, caractérisée par le fait que la liaison entre la chambre principale aval (12) et l'organe (5) sensible à la pression comporte un clapet de sécurité (50, 51), par le fait qu'il est prévu une enceinte de référence (30) subdivisée par une troisième membrane (33) en une chambre de pression de référence (31), et une chambre de protection (32) reliée à la chambre principale aval, et par le fait que la chambre de pression de référence (31) comporte un autre moyen de rappel élastique taré (34), tandis que la troisième membrane (33) est couplée au clapet de sécurité (50, 51) pour fermer celui-ci en cas de surpression dans la chambre principale aval.

4. Tête de détection de niveau selon l'une des revendications 1 à 3, caractérisée par le fait que l'organe (5) sensible à la pression comporte un quartz piézo-résistif.

5. Tête de détection de niveau selon la revendication 4, caractérisée par le fait que l'organe (5) sensible à la pression comporte également un réseau résistif (58) à décades pour le réglage de gamme et/ou un réseau de réglage en fonction de la densité du liquide.

6. Tête de détection de niveau selon l'une des revendications 4 et 5, prise en dépendance de la revendication 3, caractérisée par le fait que la chambre de pression référence (31) comporte un orifice de liaison (59) vers le haut du réservoir, et une autre liaison (55) vers l'organe sensible à la pression, ce dernier détectant alors la différence de pression entre le haut du réservoir et la chambre aval principale.

**Claims**

1. Head for the detection of a liquid level in a reservoir by the hydrostatic effect, which head is intended to be connected to a probe immersed in the liquid surmounted by a gas and the level of which is to be measured, this head comprising a main enclosure (10), subdivided into a main upstream chamber (11) and a main downstream chamber (12) by a membrane (13) having spring restoring means (14), a probe orifice (1) filled with the said gas and which communicates with the main downstream chamber (12), an inlet (4) for the said gas under pressure, which communicates with the main upstream chamber (11) through the intermediary (21) of a valve (45) connected to the membrane (13), in order to define the pressure in the main upstream chamber with respect to the pressure in the main downstream chamber, a branch pipe for the regulation of the flow, provided between the main upstream chamber (11) and main downstream chamber (12) and a member (5) sensitive to the pressure, connected to the main downstream chamber, which makes it possible to measure the downstream pressure corresponding to a given rate of flow and henceforth the height of the liquid, characterised by the fact that the connection of the main downstream chamber (12) to the probe comprises an auxiliary enclose (20), itself defined as an upstream auxiliary chamber (21) and downstream auxiliary chamber (22) by another membrane (23), the upstream auxiliary chamber (21) communicating with the inlet for the gas under pressure, whereas the downstream auxiliary chamber (22) serves as a connection (19) between the main downstream chamber (11) and the probe (1), whilst comprising calibrated spring return means (24) and a probe valve (27), mounted in order to close in the absence of the arrival of gas under pressure, which thus prevents an ascent of liquid from the reservoir towards the level detection head.

2. Level detection head according to Claim 1, characterised by the fact that provided in the vicinity of the probe valve (27) is an orifice (29) which is normally closed off, which, once opened, is in direct connection with the downstream auxiliary chamber (22) thus allowing the calibration in situ of the level detection.

3. Level detection head according to one of Claims 1 and 2, characterised by the fact that the connection between the main downstream chamber (12) and the member (5) which is sensitive to pressure comprises a safety valve (50, 51), by the fact that a reference enclosure (30) is provided which is subdivided by a third membrane (33) into a reference pressure chamber (31) and a protection chamber (32) connected to the main downstream chamber and by the fact that the reference pressure chamber (31) comprises other calibrated spring return means (34), whereas the third membrane (33) is connected to the safety valve (50, 51) in order to close the latter in the case of excess pressure in the main downstream chamber.

4. Level detection head according to one of Claims 1 to 3, characterised by the fact that the member (5) which is sensitive to pressure comprises a piezoresistive quartz member.

5. Level detection head according to Claim 4, characterised by the fact that the member (5) which is sensitive to pressure also comprises a resistive system (58) comprising decades for the range regulation and/or a regulation system depending on the density of the liquid.

6. Level detection head according to one of Claims 4 and 5, taken in dependence on Claim 3, characterised by the fact that the reference pressure chamber (31) comprises an orifice (59) for connection to the top of the reservoir and another connection (55) to the member which is sensitive to pressure, the latter thus detecting the pressure difference between the top of the reservoir and the main downstream chamber.

**Patentansprüche**

1. Niveaumeßkopf zum Erfassen des Flüssigkeitsniveaus in einem Reservoir mit hydrostatischem Effekt zur Anordnung an einer Sonde, die in die von einem Gas beaufschlagte Flüssigkeit, dessen Niveau zu messen ist, eintaucht, wobei der Kopf eine eingeschlossene Hauptkammer (10), welche in eine aufströmige Hauptkammer (11) und eine abströmige Hauptkammer (12) mittels einer Membran (13) mit elastischer Rückführung (14) unterteilt ist, eine Sondenöffnung der Sonde (1), welche mit dem genannten Gas gefüllt ist und mit der abströmigen Hauptkammer (12) kommuniziert, einen Einlaß (4) für das unter Druck stehende Gas, welche mit der aufströmigen Hauptkammer (11) über Zwischenschaltung (21) eines Ventils (45) kommuniziert, das an die Membran (13) angekuppelt ist, derart, daß der Druck in der aufströmigen Hauptkammer bezüglich des Druckes in der abströmigen Hauptkammer definiert wird, eine Nebenschlußleitung zum Regeln der Durchflußmenge, die zwischen der aufströmigen Hauptkammer (11) und der abströmigen Hauptkammer (12) angeordnet ist, und ein druckempfindliches Organ (5) aufweist, das mit der abströmigen Hauptkammer verbunden ist, was eine Messung des abströmigen Druckes entsprechend einem gegebenen Durchfluß und damit der Höhe des Flüssigkeitsstandes erlaubt, dadurch gekennzeichnet, daß die Verbindung der abströmigen Hauptkammer (12) mit der Sonde eine eingeschlossene Hilfskammer (20) aufweist, die selbst in eine aufströmige Hilfskammer (21) und eine abströmige Hilfskammer (22) mittels einer weiteren Membran (23) unterteilt ist, wobei die aufströmige Hilfskammer (21) mit dem Einlaß für das unter Druck stehende Gas kommuniziert, während die abströmige Hilfskammer (22) zur Verbindung (19) zwischen der abströmigen Hauptkammer (12) und der Sonde (1) dient, und daß eine austarierte elastische Rückführung (24) und ein Sonden-Schließglied (27) vorgesehen sind, wobei letzteres so angeordnet ist, daß es in Abwesenheit vom Eintritt unter Druck stehendem Gases absperrt, was ein Wiederaufsteigen der Flüssigkeit aus dem Reservoir zum Niveaumeßkopf hindert.

2. Niveaumeßkopf nach Anspruch 1, dadurch gekennzeichnet, daß auf dem Niveau des Sonden-Schließgliedes (27) eine normalerweise verschlossene Öffnung (29) vorgesehen ist, die in geöffnetem Zustand direkt mit der abströmigen Hilfskammer (22) kommuniziert und so eine Eichung in situ der Niveaumessung ermöglicht.

3. Niveaumeßkopf nach Anspruch 1 oder 2, dadurch gekennzeichnet, daß die Verbindung zwischen der abströmigen Hauptkammer (12) und dem druckempfindlichen Organ (5) ein Sicherheitsventil (50, 51) aufweist, daß eine Referenzdruckkammer (30) mittels einer dritten Membran (33) in eine Referenzdruckkammer (31) und eine Schutzkammer (32) unterteilt ist, welche mit der abströmigen Hauptkammer verbunden ist, und daß die Referenzdruckkammer (31) eine weitere austarierte elastische Rückführung (34) umfaßt, während die dritte Membran (33) mit dem Sicherheitsventil (50, 51) gekuppelt ist, um dieses im Falle von Überdruck in der abströmigen Hauptkammer zu schließen.

4. Niveaumeßkopf nach einem der Ansprüche 1 bis 3, dadurch gekennzeichnet, daß das druckempfindliche Organ (5) einen piezoresistiven Quarz aufweist.

5. Niveaumeßkopf nach Anspruch 4, dadurch gekennzeichnet, daß das druckempfindliche Organ (5) ferner einen Dekaden-Netzwiderstand (58) zum Regeln des Bereichs und/oder eine Regelanordnung zum Regeln in Funktion der Flüssigkeitsdichte aufweist.

6. Meßkopf nach einem der Ansprüche 4 oder 5 in Verbindung mit Anspruch 3, dadurch gekennzeichnet, daß die Referenzdruckkammer (31) eine Verbindungsöffnung (59) zur Oberseite des Reservoirs und eine andere Verbindung (55) zum druckempfindlichen Organ aufweist, wobei dieses letztere folglich die Druckdifferenz zwischen der Oberseite des Reservoirs und der abströmigen Hauptkammer mißt.

0 088 026

FIG_1

FIG. 2

FIG. 3